# EUROPEAN PATENT SPECIFICATION

(11) **EP 0 683 737 B1**
(45) Date of publication and mention of the grant of the patent: **16.10.1996**
(21) Application number: 94906101.4
(22) Date of filing: 22.02.1994
(51) Int. Cl.: B60R 1/08, B60R 1/02

(54) **OUTSIDE MIRROR FOR A VEHICLE**
AUSSENSPIEGEL FÜR EIN FAHRZEUG
RETROVISEUR EXTERIEUR POUR VEHICULE

(30) Priority: 22.02.1993 BE 9300162; 16.12.1993 BE 9301402
(43) Date of publication of application: 29.11.1995
(73) Proprietor: WORMS, Louis, B-2600 Berchem (BE)
(72) Inventor: WORMS, Louis, B-2600 Berchem (BE)
(74) Representative: Debrabandere, René
(86) International application number: BE9400015
(87) International publication number: WO9419211

(56) References cited:
- FR-A- 2 553 352
- US-A- 2 573 812
- US-A- 2 663 224
- US-A- 3 826 563
- DATABASE WPI Section Ch, Week 8621, Derwent Publications Ltd., London, GB; Class M27, AN 86-134452 & JP,A,61 071 243 (MORI T) 12 April 1986

## Description

The invention concerns an outside mirror for a vehicle, which outside mirror contains a supporting structure with a housing and a mirror part which contains at least two mirror surfaces which are framed in one and the same housing, form an angle and are situated on top of one another in the direction parallel to the theoretical intersecting line of their planes.

Outside mirrors of this type are already known in order to eliminate what is called the "dead angle" which occurs in flat mirrors and as a result of which a vehicle taking over cannot be seen in these mirrors at a given moment. As the mirror surfaces are situated on top of one another, the user sees two clearly separated images without any risk of confusion.

Such an outside mirror is described in patent US-A-2 663 224. The material of the mirror part is not mentioned. We may assume that, as usual, this material is glass with a reflecting foil on the back side. A glass mirror part with two surfaces situated on top of one another forming an angle is very difficult to make in one piece in practice, given the complicated form. Such a mirror part would in any case be very expensive. That is why the mirror part is formed of two separate mirror elements which are mounted fixed in relation to one another in one and the same housing according to an embodiment.

Such an outside mirror is also known from patent US-A-3 826 563, but also in this case the mirror part consists of two separate mirror elements of mirror glass mounted in the housing.

Because of the two separate mirror elements, these outside mirrors are not only relatively expensive and have a relatively complex construction, but dirt or moisture can usually penetrate between the mirror elements in the housing, whereas there is danger that one of the mirror elements comes loose from the housing as a result of jolts.

The invention aims to remedy these disadvantages and to provide an outside mirror for a vehicle which has a very simple construction, is relatively cheap and very safe and has a long life.

This aim is reached according to the invention as the mirror surfaces are directly and materially connected to one another by means of a connecting part mirror surface portion so that they consist into one single mirror element which consists of a suitable shaped sheet which is reflective on its outside, at least at the height of the mirror surfaces.

US-A-2 573 812 discloses the use of a single strip of sheet material instead of a plurality of individual sections of glass for a rear vision mirror.

This mirror is however an inner mirror comprising a great number of mirror surfaces which are situated laterally one adjacent to the other and which are moreover extending in parallel relationship to each other.

Preferably, the mirror element consists of a folded metal sheet.

The sheet can be made reflective either entirely or at the height of the mirror surfaces only by applying a reflective layer, for example in the form of a reflective foil which is glued, or in the form of a layer which is applied for example in an electrochemical manner or by means of spraying.

In the case of a metal sheet, however, this is made entirely reflective by machining the metal itself, for example by polishing it.

According to a practical embodiment of the invention, the sheet is made of stainless steel.

On the side averted from the reflective side, for example on the connecting part, an electrical heating element may be mounted.

Thus, the formation of steam or ice on the outside mirror can be avoided.

The invention also concerns a vehicle equipped with an outside mirror according to any of the previous embodiments.

Thus, the invention also concerns a vehicle containing at least an outside mirror with a supporting structure mounted on the bodywork of the vehicle and containing a housing, and a mirror part containing at least two mirror surfaces which are framed in one and the same housing and, seen from the outward direction, extend in different directions and thus form an angle, and which are situated on top of one another, and which are characterized in that the two mirror surfaces are directly and materially connected to one another by means of a connecting mirror surface portion so that they consist into one single mirror element of a suitable shaped sheet which is reflective on its the outside, at least at the height of the mirror surfaces.

Preferably, the sheet is a folded metal sheet.

The invention will become clear from the following description of an outside mirror for a vehicle and of a vehicle equipped with such an outside mirror according to the invention. This description is given as an example only and does not limit the invention in any way. The reference figures refer to the accompanying drawings, where:
figure 1 shows a top view of a vehicle equipped with an outside mirror according to the invention;
figure 2 shows the part from figure 1 indicated by F2 to a larger scale;
figure 3 shows a view according to arrow F3 indicated in figure 3;
figure 4 shows a view in perspective of the mirror element of the outside mirror from the previous figures to a larger scale;
figure 5 shows a front view according to arrow F5 from figure 4;
figure 6 shows a side view according to arrow F6 from figure 5;
figure 7 shows a top view according to arrow F7 from figure 5.

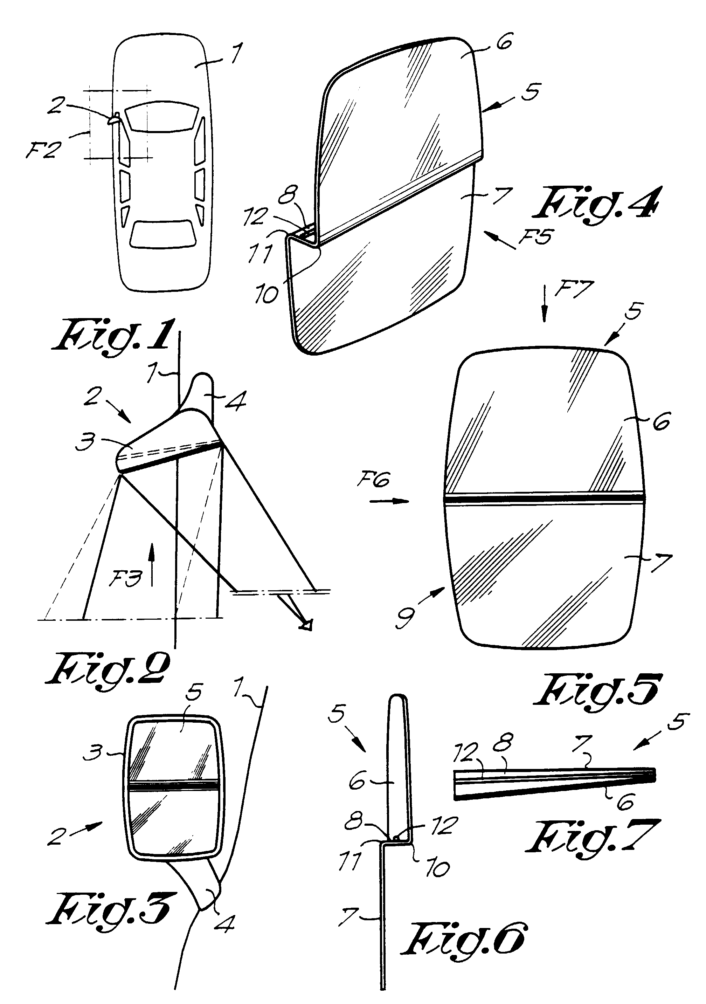

Figure 1 shows a passenger car carrying an outside mirror 2 according to the invention on its bodywork 1. This outside mirror 2 mainly consists of a supporting structure 3,4 and a mirror part mounted thereupon consisting of one mirror element 5. The supporting structure 3,4 consists of a housing 3 and a foot 4 with which the housing 3 is connected in a hinging and thus slightly adjustable manner. The foot 4 is screwed on the bodywork 1 on the side of the passenger.

The mirror element 5 contains two mirror surfaces 6 and 7 situated on top of one another which are connected to each other by means of a connecting part 8 which is practically perpendicular to these mirror surfaces.

In the outward direction in relation to the vehicle the mirror surfaces 6 and 7 are turned in different directions, such that they form an angle. In the direction which is parallel to the theoretical line according to which the planes of the mirror surfaces 6 and 7 intersect, the mirror surfaces 6 and 7 are situated on top of one another.

The mirror element 5 consists of a folded metal sheet 9 of one piece which is reflective on the outside of the mirror, i.e. on the side seen by the driver, at least at the height of the mirror surfaces 6 and 7 and preferably over its entire surface. As the two mirror surfaces 6 and 7 which are situated on top of one another form an angle, the metal sheet 9 is provided with two folds 10 and 11 which thus form the transition of a mirror surface 6 or 7 to the connecting part 8. Away from the passenger car, the folds 10 and 11 draw apart.

According to a first embodiment, the mirror surfaces 6 and 7 and preferably the entire mirror element 5 are made reflective on the outside by means of a reflective foil which is applied on the metal, for example glued onto it. This foil may consist of several layers, for example a layer of adhesive for gluing it on the metal, an actual reflective layer of for example mercury, and a protective layer of resin or varnish.

According to a second embodiment, the mirror element 5 is made reflective on the outside, at the height of the mirror surfaces 6 and 7 and preferably entirely, by means of a reflective layer which is applied on the metal in an electrochemical or other way, for example by means of spraying, vacuum evaporation or other thin-film techniques. Such a layer is for example made of chrome.

According to a third and preferred embodiment, the mirror element 5 is made reflective on the outside at the height of the mirror surfaces 6 and 7 or even entirely, by machining the metal of the folded plate 9. Said machining may consist of polishing, possibly followed by the application of a transparent protective layer.

The metal of the sheet 9 may be nickel, copper, chrome, aluminium or even steel, but preferably, and especially in the third embodiment, this metal is stainless steel. A very suitable stainless steel is cold-rolled NIROSTA 4301 3C AISI 304 2B or 4301 3C AISI 316 2B.

The folded mirror element 5 is framed with its edges in the housing 3, as represented in figure 3. In this housing 3, an electrical heating element 12 is mounted on the connecting part 8 with which the mirror element can be heated if required so as to remove steam, rain drops or ice.

A layer of a well conducting material such as aluminium can be possibly applied on the back side of the folded plate so as to better distribute the heat. The electrical heating element can also be partly situated against the mirror surfaces 6 and 7.

From his seat, the driver sees two images on the mirror surfaces 6 and 7 respectively, which are situated on top of one another and thus are clearly separated. These two mirror surfaces 6 and 7 cover different areas as they have different outward directions. The top mirror surface 6 is directed for example such as the conventional flat outside mirror of a vehicle, so that the side of the vehicle can be seen in this mirror surface 6. The bottom mirror surface 7 is outwardly directed more to the front of the passenger car, so that the area situated next to the back of the passenger car, and thus in the dead angle of the surface, can be seen in this mirror surface 7.

The construction of the outside mirror 2 is very simple, especially because it has only one mirror element 5. Because, on top of this, also the mirror element is relatively cheap, this outside mirror can be manufactured cheaply. Nevertheless, it offers the driver a very clear and complete view of the traffic next to the vehicle, at a single glance, without any dead angles.

The invention is by no means limited to the above-described embodiments; on the contrary, within the scope of the patent application, many changes can be made to the described embodiment, among other as far as shape, composition, arrangement and the number of parts are concerned which are used for the realization of the invention.

Thus, although a metal sheet is preferred, the sheet can also be made of a synthetic material, on the understanding that some of the above-mentioned techniques for making the sheet reflective, such as polishing, are not suited.

Nor should the vehicle necessarily be a passenger car. It may also be a delivery van or a truck.

The outside mirror should not be necessarily mounted on the vehicle on the driver's side. Such an outside mirror may also be mounted on the other side, or the vehicle may have such an outside mirror on either side.

## Claims

1. Outside mirror for a vehicle, which outside mirror contains a supporting structure (3,4) with a housing (3) and a mirror part which contains at least two mirror surfaces (6, 7) which are framed in one and the same housing (3), form an angle and are situated on top of one another in the direction parallel to the theoretical intersecting line of their planes, characterized in that the mirror surfaces (6, 7) are directly and materially connected to one another by means of a connecting mirror surface portion (8) so that they consist into one single mirror element (5) of a suitable shaped sheet (9) which is reflective on its outside, at least at the height of the mirror surfaces (6, 7).

2. Outside mirror according to the above claim, characterized in that the mirror element (5) consists of a folded metal sheet (9).

3. Outside mirror according to any of the above claims, characterized in that the suitable shaped sheet (9) is made reflective, at least at the height of the mirror surfaces (6 and 7) by applying a reflective layer.

4. Outside mirror according to claim 2, characterized in that the suitable shaped sheet (9) is made reflective, at least at the height of the mirror surfaces (6 and 7) by machining the metal itself.

5. Outside mirror according to the above claim, characterized in that the suitable shaped sheet (9) is made of stainless steel.

6. Outside mirror according to any of the above claims, characterized in that an electrical heating element (12) is mounted on the side averted from the reflective side of the mirror element (5).

7. Vehicle containing at least an outside mirror (2) with a supporting structure (3,4) mounted on the bodywork (1) of the vehicle and containing a housing (3), and a mirror part containing at least two mirror surfaces (6,7) which are framed in one and the same housing (3) and, seen from the outward direction, extend in different directions and thus form an angle, and which are situated on top of one another, and which are characterized in that the two mirror surfaces (6, 7) are directly and materially connected to one another by means of a connecting mirror surface portion (8) so that they consist into one single mirror element (5) of a suitable shaped sheet (9) which is reflective on its outside at least at the height of the mirror surfaces (6, 7).

8. Vehicle according to the previous claim, characterized in that the suitable shaped sheet (9) is a folded metal sheet.

## Patentansprüche

1. Außenspiegel für ein Fahrzeug, welcher Außenspiegel eine Tragestruktur (3,4) mit einem Gehäuse (3) und ein Spiegelteil umfaßt, das zumindest zwei Spiegelflächen (6,7) umfaßt, die in ein und demselben Gehäuse (3) gefaßt sind, einen Winkel bilden und in der Richtung parallel zur theoretischen Schnittlinie ihrer Ebenen übereinander gelegen sind, dadurch gekennzeichnet, daß die Spiegelflächen (6,7) mittels eines verbindenden Spiegelflächenteils (8) direkt und materiell miteinander verbunden sind, so daß sie aus einem einzigen Spiegelelement (5) aus einer in geeigneter Weise geformten Platte (9) bestehen, die an ihrer Außenseite zumindest in Höhe der Spiegelflächen (6,7) reflektierend ist.

2. Außenspiegel gemäß dem obengenannten Anspruch, dadurch gekennzeichnet, daß das Spiegelelement (5) aus einer gefalteten Metallplatte (9) besteht.

3. Außenspiegel gemäß einem der obengenannten Ansprüche, dadurch gekennzeichnet, daß die in geeigneter Weise geformte Platte (9) zumindest in Höhe der Spiegelflächen (6 und 7) durch Anbringen einer reflektierenden Schicht reflektierend gemacht ist.

4. Außenspiegel gemäß Anspruch 2, dadurch gekennzeichnet, daß die in geeigneter Weise geformte Platte (9), zumindest in Höhe der Spiegelflächen (6 und 7), durch Bearbeiten des Metalls selbst reflektierend gemacht ist.

5. Außenspiegel gemäß dem obengenannten Anspruch, dadurch gekennzeichnet, daß die in geeigneter Weise geformte Platte (9) aus rostfreiem Stahl gefertigt ist.

6. Außenspiegel gemäß einem der obengenannten Ansprüche, dadurch gekennzeichnet, daß ein elektrisches Heizelement (12) auf der von der reflektierenden Seite abgewandten Seite des Spiegelelements (5) montiert ist.

7. Fahrzeug, umfassend zumindest einen Außenspiegel (2) mit einer Tragestruktur (3,4), der auf der Karosserie (1) des Fahrzeugs montiert ist und ein Gehäuse (3) und ein Spiegelteil umfaßt, das zumindest zwei Spiegelflächen (6,7) umfaßt, die in ein und demselben Gehäuse (3) gefaßt sind und sich, von der Außenrichtung her gesehen, in verschiedene Richtungen erstrecken und somit einen Winkel bilden, und die übereinander gelegen sind, und die dadurch gekennzeichnet werden, daß die zwei Spiegelflächen (6,7) mittels eines verbindenden Spiegelflächenteils (8) direkt und materiell miteinander verbunden sind, so daß sie aus einem einzigen Spiegelelement (5) aus einer in geeigneter Weise geformten Platte (9) bestehen, die an ihrer Außenseite zumindest in Höhe der Spiegelflächen (6,7) reflektierend ist.

8. Fahrzeug gemäß dem vorgenannten Anspruch, dadurch gekennzeichnet, daß die in geeigneter Weise geformte Platte (9) eine gefaltete Metallplatte ist.

## Revendications

1. Rétroviseur extérieur pour véhicule, lequel rétroviseur extérieur contient une structure de support (3,4) avec un logement (3) et une partie de miroir contenant au moins deux surfaces de miroir (6,7) qui sont encadrées dans un seul logement (3), constituent un angle et sont montées l'une au-dessus de l'autre, dans une direction parallèle à la ligne théorique qui coupe leurs plans, caractérisé en ce que les surfaces de miroir (6,7) sont directement et matériellement connectées l'une à l'autre au moyen d'une partie de surface de miroir connectrice (8), de telle manière qu'elles consistent en un seul élément de miroir (5), d'une feuille de configuration appropriée (9), qui est réfléchissante à sa partie extérieure, au moins à la hauteur des surfaces de miroir (6,7).

2. Rétroviseur extérieur suivant la revendication précédente, caractérisé en ce que le miroir (5) consiste d'une feuille métallique pliée (9).

3. Rétroviseur extérieur suivant l'une quelconque des revendications précédentes, caractérisé en ce que la feuille de configuration appropriée (9) est faite réfléchissante, au moins à la hauteur des surfaces de miroir (6 et 7), en appliqant une couche réfléchissante.

4. Rétroviseur extérieur suivant la revendication 2, caractérisé en ce que la feuille de configuration appropriée (9), est faite réfléchissante, au moins à la hauteur des surfaces de miroir (6 et 7), en façonnant le métal lui-même.

5. Rétroviseur suivant la revendication précédente, caractérisé en ce que la feuille de configuration appropriée (9) est faite en acier inoxydable.

6. Rétroviseur suivant l'une quelconque des revendications précédentes, caractérisé en ce qu'un élément d'échauffement électrique (12) est monté au côté écarté du côté réfléchissant de l'élément de miroir (5).

7. Véhicule contenant au moins un rétroviseur extérieur (2), avec une structure de support (3,4), monté sur la carcasse (1) du véhicule et contenant un logement (3), et une partie de miroir contenant au moins deux surfaces de miroir (6,7), qui sont encadrées dans un seul logement (3) et, vu de l'extérieur, s'étendent en différentes directions et forment ainsi un angle, et qui sont situées l'une au-dessus de l'autre, et qui sont caractérisées en ce que les deux surfaces de miroir (6,7) sont connectées directement et matériellement l'une à l'autre au moyen d'une partie de surface de miroir connectrice (8), de manière à ce qu'elles consistent d'un seul élément de miroir (5) d'une feuille de configuration appropriée (9), qui est réfléchissante à sa partie extérieure au moins à la hauteur des surfaces de miroir (6,7).

8. Véhicule suivant la revendication précédente, caractérisé en ce que la feuille de configuration appropriée (9) est une feuille métallique pliée.
